# EUROPEAN PATENT SPECIFICATION

(11) **EP 2 630 614 B1**
(45) Date of publication and mention of the grant of the patent: **12.12.2018**
(21) Application number: 10858574.6
(22) Date of filing: 22.10.2010
(51) Int. Cl.: G06K 7/10, G06K 19/07, G06K 19/077, G01K 1/02, G01K 7/32, G06K 7/00, H04W 4/80, G06F 21/35, G06F 21/83, G06F 21/84

(54) **ADVANCED FUNCTIONALITY OF REMOTE-ACCESS DEVICES**
ERWEITERTER FUNKTIONALITÄT VON VORRICHTUNGEN MIT FERNZUGRIFF
FONCTIONNALITÉ AVANCÉE POUR DISPOSITIFS D'ACCÈS À DISTANCE

(43) Date of publication of application: 28.08.2013
(73) Proprietor: Smartrac Investment B.V., 1077 XX Amsterdam (NL)
(72) Inventor: VIRTANEN, Juhani, FI-33100 Tampere (FI); MANNINEN, Antti, FI-33100 Tampere (FI); NIKKANEN, Mikko, FI-33710 Tampere (FI)
(74) Representative: Berggren Oy, Tampere
(86) International application number: PCT/FI2010/050836
(87) International publication number: WO 2012/052599

(56) References cited:
- GB-A- 2 308 947
- US-A1- 2004 036 626
- US-A1- 2004 036 626
- US-A1- 2006 261 946
- US-A1- 2010 060 449
- US-A1- 2010 134 257

## Description

### Field of the Invention

The present invention relates to advanced capabilities of remote-access devices, for example RFID tags. More specifically, the present invention relates to defining and using advanced capabilities of the remote-access devices, and for detecting the capabilities and enhancing the functions of such devices.

### Background of the Invention

Modern logistics was to a great degree enabled by the development of the product code system and bar codes. Products and pallets could be quickly identified by reading a bar code with an optical reader, and the tracking of items in the logistic chain became feasible. Furthermore, the products could be counted and sold at the point of sale more quickly and more reliably. Beyond consumer product logistics, industrial material management systems, postal and courier services, healthcare and bio-analytics systems and many other fields of human activity have benefitted from the use of bar codes.

Over time, the needs of having various kinds of information available on a product outgrew the capabilities of a simple bar code. To this end, new technologies were developed, such as two-dimensional bar codes. Of such technologies, radio frequency identification (RFID) has rather quickly become the technology of choice for identifying and tracking items. RFID technology has a vast number of applications making use of the ability to read an RFID tag from a distance even without a line-of-sight connection between the reader and the tag. RFID is quickly replacing or at least augmenting the bar code technology in many places.

The basic information that an RFID tag carried has traditionally been electronic product code (EPC) information and/or tag identification information. RFID tags with more capabilities may have the ability to store more information in the tag memory, and even carry out some simpler processing of data.

A radio frequency identification tag (RFID tag) typically comprises an RFID chip and an antenna connected to the chip, attached to or protected inside a plastic layer. The RFID chip contains analog and/or digital processing circuitry, e.g. a state machine and/or a processor and memory for storing information, as well as circuitry for receiving radio frequency (RF) energy and modulating the RF wave. The chip is connected to the antenna, whose shape and size depend on the frequency at which the tag operates and the application for which the tag is used. The chip and the antenna are often laid inside a thin plastic container for protection. The tag as a whole is typically flexible to a certain degree, especially the passive tags that do not contain a power supply.

Passive tags use the energy from the radio-frequency electromagnetic field of the read-out signal to power the operations that the tag carries out. Passive tags operate essentially while they are in the reader field, and are essentially inactive at other times. Therefore, the farther the reader device and the weaker the read-out signal, the less energy is available for the tag to use. This in turn means that the tag cannot perform very complex operations that would require a lot of power, since such tags could only be read from a very short distance away. In other words, the read-out distance of a tag is to a large extent determined by the power consumption requirements of the tag. Naturally, the attenuation and power distribution of the electromagnetic signal emitted by the tag is another concern. To tackle this issue, some passive tags have a battery that may be used to power the processing circuitry and thereby allow longer operating range for the tag. Such tags that use an internal power source to energize the response signal may be called semi-passive tags.

Some applications may necessitate more complex processing and/or more demanding properties of the RFID tag. It may become necessary to arrange more internal power such that these operations may be carried out. Some tags may require an internal power source to communicate with a longer range. Such tags may be called active tags. It may also be necessary to provide internal power so that operations can be carried out at times when the power from the external radio frequency electromagnetic field is not available. Usually this is arranged by means of a battery attached to the RFID tag. The battery may power sensors, memory, processors and/or a transmitter of the tag so that sensing, data logging and processing may be carried out at any time. The publication of patent application US2010060449 discloses an integrated device with an RFID module and a power supply for powering external sensors. The publication of patent US2004/0036626 discloses an RFID system for communicating body characteristic information such as temperature information.

Such more complex tags may be more complicated to manufacture, more expensive and/or more prone to malfunction than passive or semi-passive tags. Moreover, any tags with an internal power supply may have a limited lifetime, since they cannot be operated properly or at all when the battery runs out. Another practical problem is that when an active tag is taken into use, the battery operation needs to be activated. Otherwise, the battery would be in use e.g. already starting from manufacturing of the tag and prior to actual active use.

There is, therefore, a need for solutions that facilitate the use of simpler tags for more complicated operations.

### Summary of the Invention

Now there has been invented an improved method and technical equipment implementing the method, by which the above problems are alleviated and that enable the use of simpler remote-access devices for more complex operations than before. Various aspects of the invention include methods, reader apparatuses, systems, remote-access devices and computer readable media comprising computer programs stored therein for carrying out the methods and operating the devices, which aspects are characterized by what is stated in the independent claims. Various embodiments of the invention are disclosed in the dependent claims.

The invention relates to a remote-access device typically used for tagging items, such as an RFID tag, a reader device for the same, system and methods of such devices. In the invention, a remote-access tag may have advanced capabilities, and the tag is able to communicate the existence of the advanced capabilities to the reader device by giving out an advanced capability code as radio frequency communication. The tag may also comprise data that are useful or necessary in employing the advanced capabilities, for example characteristics of the tag regarding the advanced functionalities like data for processing the information resulting from the use of advanced capabilities. The capability code and/or the data may reside in the memory of the tag, and may be protected by means of a password or encryption. The password or decryption key may be such that it can be derived from other information on the tag such as a tag ID or the electronic product code. It may also be possible to store information back to the tag from the reader after determining the information by employing the advanced capabilities of the tag. The results of the advanced functionality may therefore be logged onto a database or they may be stored back to the remote-access device. The invention distributes the tasks of the advanced functionality between a passive remote-access device such as an RFID device and a reader device, and possibly a network system. This may offer several advantages, e.g. making it unnecessary to have a power supply on the remote-access device for complex operations like temperature measurements.

According to an aspect a method for utilizing advanced functionality of an RFID device, wherein said advanced functionality being functionality other than providing an identification, and wherein said RFID device being energetically passive, comprises receiving an advanced functionality code from said RFID device, said advanced functionality code indicating that said RFID device provides said advanced functionality, and said advanced functionality code enabling a reader to adjust its operation according to said advanced functionality, requesting information from said RFID device, said information relating to said advanced functionality, and based on said received advanced functionality code, utilizing said advanced functionality by using said requested information.

According to another aspect a reader apparatus for utilizing advanced functionality of an RFID device, wherein said RFID device being energetically passive, and wherein said advanced functionality being functionality other than providing an identification, comprises a processor, memory including computer program code, the memory and the computer program code configured to, with the at least one processor, cause the reader apparatus to receive an advanced functionality code from said RFID device, said advanced functionality code indicating that said RFID device provides said advanced functionality, and said advanced functionality code enabling said reader to adjust its operation according to said advanced functionality, request information from said RFID device, said information relating to said advanced functionality, and based on said received advanced functionality code, utilize said advanced functionality by using said requested information.

According to yet another aspect a method for providing advanced functionality by an RFID device to a reader device, wherein said advanced functionality being functionality other than providing an identification, and wherein said RFID device being energetically passive, comprising sending an advanced functionality code from said RFID device to said reader device, said advanced functionality code indicating that said RFID device provides said advanced functionality, and said advanced functionality code enabling said reader device to adjust its operation according to said advanced functionality, receiving a request for information according to said advanced functionality code from said reader device, said information relating to said advanced functionality, and sending said requested information according to said advanced functionality code to said reader device for utilizing said advanced functionality.

According to other aspect an RFID device being energetically passive and arranged to operate by using energy from a received wireless signal, comprises an antenna, logic circuitry such as a logic gate arrangement or a processor and memory including computer program code executable on said processor, the logic circuitry or computer program code configured to cause the RFID device to send an advanced functionality code from said RFID device to a reader device, said advanced functionality code indicating that said RFID device provides said advanced functionality, said advanced functionality being functionality other than providing an identification, and said advanced functionality code enabling a reader to adjust its operation according to said advanced functionality, receive a request for information according to said advanced functionality code from said reader device, said information relating to said advanced functionality, and send said requested information according to said advanced functionality code to said remote-access reader for utilizing said advanced functionality.

According to yet other aspect a method of manufacturing an energetically passive RFID device, comprises combining at least a chip and an antenna to form an RFID device, forming identification data into a memory of the RFID device, forming an advanced capability code onto the RFID device for sending the advanced functionality code from the RFID device to a reader device, wherein the advanced capability code is indicative of an advanced capability of the RFID device, said advanced capability being capability other than providing an identification, and said identification data being different from said advanced capability code.

According to an aspect a computer program product embodied on a computer readable medium comprises computer program code, said computer program code arranged to, when executed on a processor, to carry out the method according to aspects or embodiments of the invention.

### Description of the Drawings

In the following, various embodiments of the invention will be described in more detail with reference to the appended drawings, in which
- Figs. 1a and 1b: show block diagrams of an RFID tag and a reader device, respectively;
- Figs. 2a and 2b: show methods for employing advanced capabilities of a tag by using an advanced capability code at the tag and at a reader device, respectively;
- Figs. 3a and 3b: show methods for employing advanced capabilities of a tag by using advanced capability data in the advanced processing at the tag and at a reader device;
- Figs. 4a and 4b: show methods for carrying the results of the advanced capability computing on the tag itself and for storing the advanced capability results onto a tag by a reader;
- Fig. 5a: shows one method for employing advanced capabilities of a tag with advanced capability code and advanced capability information, and carrying the information on the tag in a protected form;
- Fig. 5b: shows one method for employing advanced capabilities of a tag with advanced capability code and advanced capability information, and carrying the information on the tag in a protected form;
- Fig. 5c: shows one method for employing advanced capabilities of a tag with advanced capability code and advanced capability information, and carrying the information on the tag in a protected form;
- Figs. 6a, 6b and 6c: show tags with an advanced capability code and advanced capability data, and with memory arranged to store information in encrypted form;
- Fig. 7: shows a reader device for employing advanced capabilities of a tag by using an advanced capability code and advanced capability information;
- Fig. 8: shows a system for employing advanced capabilities of tags with a number of tags, reader devices and networked computers;
- Fig. 9: shows a system for manufacturing tags with advanced capabilities;
- Fig. 10: shows a method for manufacturing tags with advanced capabilities; and
- Fig. 11: shows temperature measurement arrangement as an illustration of utilizing an advanced capability of a tag.

### Detailed Description of Example Embodiments

In the following, several embodiments of the invention will be described in the context of radio frequency identification (RFID) tags. It is to be noted, however, that the invention is not limited to RFID tags and systems only. In fact, the different embodiments have applications widely in any environment where advanced functionalities of small devices with limited power supply are needed.

It has been noticed in the context of this invention that certain advanced applications of RFID tags would require active RFID tags (such tags that have a power supply), and that this would in turn make the tags more complicated and more expensive. Alternatively, straightforward implementtation of advanced functionality on passive RFID tags would increase the power consumption of the tags and thereby reduce the effective reading range or operational range of the tag. Various embodiments of the invention are envisioned to be used with RFID tags that are energetically essentially passive, that is, with tags that operate essentially while being in the reader field and being able to draw energy from the field.

In the invention, some of the processing required by the advanced functionality of a passive RFID tag may be carried out in the reader device or elsewhere in the system. This makes it possible to reduce the power consumption of the RFID tag and for the tag to have an improved operational range. The invention may help to keep the tag electronics simple and thus usable in weaker reader fields and/or longer reading ranges. On the other hand the invention may also reduce need for powerful readers to compensate for the tag power consumption. The latter benefit may be significant in some environments with many readers in the same area and/or where interfering electromagnetic fields need to be kept to a minimum. Functionalities such as computing a measurement value and managing information security may be carried out in the reader or a network computer, and implementing such advanced functionality in a traditional manner would have increased the power consumption of the tag significantly. The novel arrangement according to the various embodiments therefore makes it possible to implement advanced functionality to a passive tag. For example, a temperature measurement may be implemented using a passive RFID tag wherein some of the measurement processing is carried out at the reader or the rest of the system.

In certain cases it has been noticed in the invention that it may be problematic if it is not known what operations the rest of the system is required to carry out. These operations may e.g. be such that they are not governed by any standard such as the UHF Gen 2 standard. An advanced functionality code has been invented to alleviate this problem. An advanced functionality code is a piece of information associated with the tag and communicated to the reader (or the rest of the system) so that the advanced functionality provided by the tag is then known. For example, an advanced functionality code may indicate that a passive tag provides an advanced functionality of a temperature measurement arranged so that part of the required processing is carried out at the reader device. The tag may send this advanced functionality code to the reader device, and the reader may then adjust its operation accordingly. As another example, the advanced functionality code may indicate an allowed condition for using or accessing the tag, for example by indicating who is allowed to used the tag, when the tag is allowed to be used, or a geographic range where the tag is allowed to be used.

In certain other cases it has been noticed in the invention that carrying out an advanced functionality in a distributed manner between the tag and the rest of the system may require some additional data that is not easily available to the system. For example, such additional data may be advanced functionality data that can be used in carrying out the advanced functionality of the tag. The advanced functionality data may for example be information specific to the tag to enhance the advanced functionality, a mathematical formula, or an access key or access code, or any other data that are specific to the tag, specific to the advanced functionality, specific to the system or otherwise associated with the tag. The advanced functionality data may be carried on the tag in a memory, or it may be accessible to the system by means of identifying the tag and using the identifier as key to accessing the advanced functionality data. The advanced functionality data therefore enables the use of the advanced functionality of the tag, or improves the use of the advanced functionality.
The advanced functionality code and the advanced functionality data may be stored on the chip or elsewhere on the tag either in easily accessible form or in protected form for example behind an access key or in encrypted form.

The embodiments of the invention provide advanced functionality for RFID tags and systems employing RFID tags. The RFID tags and readers may operate according to a standard, and the advanced functionality code and advanced functionality data may be used to enhance the operations of passive RFID tags. For example, the RFID tag may carry in its memory the information necessary to carry out a function that goes beyond the standard. As an example, the determination of temperature may be considered.

For some applications it may suffice to use the advanced functionality code only, and advanced functionality data may not be required. For some other applications, the advanced functionality data may contain information that is necessary for the use of the advanced functionality, or the advanced functionality data may enhance the operation of the advanced functionality. The advanced functionality code AFC and the advanced functionality data AFD may for example be such that the AFC informs the reader that the tag is suitable for temperature measurement, and the AFD provides information to be used in the determination of the temperature.

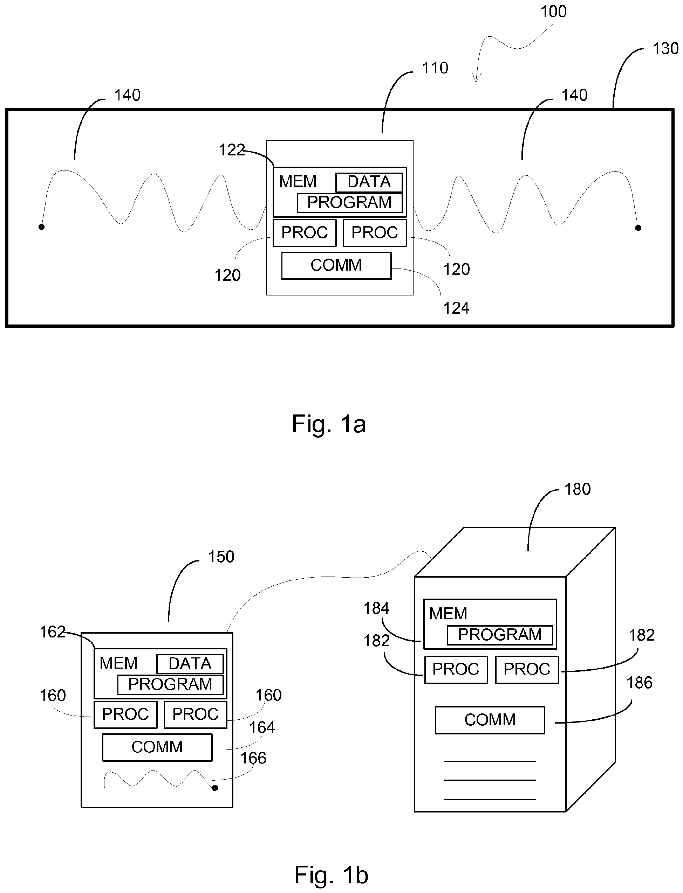

Figs. 1a and 1b show block diagrams of an RFID tag and a reader device, respectively. In Fig 1a, a passive RFID tag 100 according to an embodiment is shown. The tag comprises a chip 110, a protective surface 130 and an antenna 140. The antenna 140 is electrically coupled to the chip 110, and the chip and the antenna are formed inside the protective surface 130. The chip may comprise analog and digital (logic) circuitry to perform its operations, and/or it may comprise one, two or more processors 120, memory 122 as one, two or more memory sections and a communication module 124 such as a radio frequency modulation circuit coupled to the antenna 140. The program and/or logic may be in the form of microcode for a processor, a gate arrangement and/or programmable logic. There may be an oscillator for determining an operating frequency for the processor. The memory 122 may comprise executable instructions for the processor, data and information related to the operation of the tag such as en electronic product code, tag identification, check sum, passwords like an access password for accessing the tag, and user data. Some of the memory may be read-only memory, and some of the memory may be writable. The memory may contain an advanced functionality code and advanced functionality data for using advanced functionality of the tag. The protective surface 130 may be made of plastic, paper or any other suitable material, preferably material that is flexible. The material may be electrically and magnetically non-conducting in order not to obstruct the operation of the antenna 140, or the material may be weakly conducting or conducting. The tag contains no battery for powering the processor. The basic operation of the tag is to extract energy from a reader signal, and to respond to the reader signal. This responding may happen by employing back-scatter modulation of the radio frequency field (e.g. for UHF tags), or by varying the load imposed by the tag on the magnetic field (e.g. for HF tags). Typically, the tag may send an electronic product code (EPC) and/or a tag identifier (TID), or an universal identifier (UID) code, EAN code, or any serial number as a response.

An RFID tag or a device may operate according to a standard. For example, the air interface may be standardized to enable interoperability of tags and reader devices. The air interface may operate according to an UHF standard wherein the tag utilizes back-scattering modulation in communication. The air interface may operate according to an HF standard wherein the tag utilizes load variation in the magnetic field. The various pieces of information stored in the tag and sent by the tag such as the EPC code may be standardized e.g. according to a Gen2 standard. The tag and/or a reader device may be standardized as a whole.

The remote-access device or a tag may have various forms. For example, the tag may comprise an inlay placed inside plastic protective layers, or inside paper or cardboard. The remote-access device may also be a tag embedded in an object, e.g. a tag inside a food package. The remote-access device may also be any object capable of operating according to the various embodiments and being otherwise energetically essentially passive. For example, the remote-access device may be a food package, container, box, barrel, pallet, vehicle or a piece of furniture like a shelf. It also needs to be understood that a remote-access device can be without definite form or it may not be an end-product. For example, a chip for an RFID device, or the combination of a chip and an antenna may form a remote-access device in an embodiment of this invention.

Fig. 1b shows an RFID reader device 150 according to an embodiment for reading information from tags. The reader device 150 comprises digital and analog circuitry for communicating with RFID tags. The reader device may comprise one, two or more processors 160, memory 162 as one, two or more memory sections and a communication module 164 such as a radio frequency modulation circuit coupled to an antenna 166. The memory 162 may comprise executable program code for the processor 160, and some of the program code and other means may be for utilizing an advanced functionality of an RFID tag based on an advanced functionality code and utilizing advanced functionality data to obtain an advanced functionality result. The reader device 150 may be operatively connected (e.g. by means of a computer network, a fixed data connection or a wireless connection) to a computer or server 180. The computer or server 180 may comprise one or more processors 182, memory 184 and communication means 186 for communicating with computers and reader devices. The server 180 may comprise database functionality for storing information collected from tags through reader devices, and/or it may comprise means for utilizing the advanced functionality of a tag, e.g. by processing information received by the reader device and computing or otherwise obtaining an advanced functionality result. The server 180 may be networked with other servers, and the server 180 may alone or together with other servers provide a network service for utilizing the advanced functionality of RFID tags.

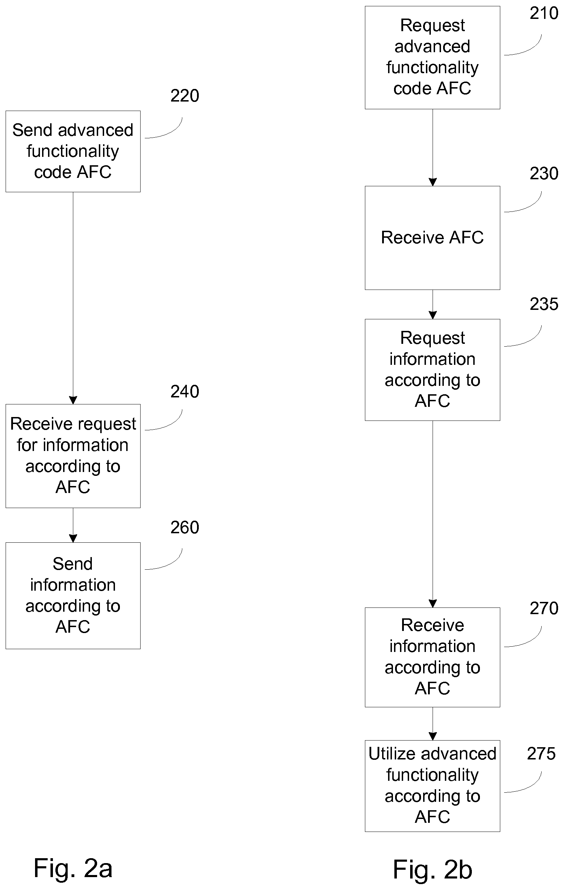

Figs. 2a and 2b show methods according to an embodiment for employing advanced capabilities of a tag by using an advanced capability code at the tag and at a reader device, respectively. In Fig. 2a, the operation of an RFID tag with advanced functionality is shown. To indicate its capability to perform advanced functionality, the tag sends an advanced functionality code AFC to the reader device in phase 220. This sending may be in response to a request, or it may be spontaneous and in addition to standard operation. The sending of the AFC may happen anywhere during employing the advanced functionality, e.g. before the operation, during the operation or as a last step. The RFID tag sends the advanced functionality code to the reader device and/or the rest of the system so that it may be determined that the tag is capable or suitable for providing advanced functionality. In phase 240, the RFID tag may receive a request from the reader device to send information according to the advanced functionality indicated by the AFC. Alternatively or in addition, the tag may assume a mode of operation based on sending the AFC so that it will next send information needed for employing the advanced functionality. In phase 260, the tag sends advanced functionality information according to the advanced functionality code AFC. This information may be such that the reader device may determine an advanced functionality result using the information e.g. in computations or by complementing the information with other data. For example, the tag may send information that is useful in determining the temperature of the tag, whereas the tag alone may be unable to determine its temperature (since it may not have a sensor and a power supply to enable this). The tag may also send information it receives from another device e.g. via a wired or wireless connection. This may enable the tag to operate as a relay station or as a transceiver (receiver-transmitter) and provide another device with an RFID communication channel. The sending of information in phase 240 may happen in a plurality of steps, for example as responses to a plurality of requests from the reader.

The advanced functionality code AFC sent by the tag may be a code stored in the user data area and accessed by the tag when it needs to be sent. Alternatively, the AFC may be part of another code, such as the electronic product code (EPC) or the tag identifier, or an access password, or any other piece of information stored on the tag. The AFC may be a number, a series of characters and numbers, or a bit sequence. The AFC may comprise multiple non-contiguous parts. The AFC enables the reader device and/or the system beyond the reader device to determine that the tag provides an advanced functionality. The tag may have specific physical or programmatic means for providing this functionality, or the tag may be a regular tag that has been determined to be suitable for use in employing the advanced functionality. The advanced functionality code may indicate that the tag is allowed to be used for the specific functionality, e.g. the tag may be approved or licensed by the manufacturer for use with this functionality. The presence and use of the AFC may indicate that the tag is able to perform the advanced functionality with certain accuracy. In addition, the AFC may indicate that the tag carries additional information such as advanced functionality data for using the advanced functionality. The advanced functionality code may also indicate the configuration of the tag, e.g. to indicate whether the tag is able to store advanced functionality results and/or whether some of the data on the tag is stored in a protected form. For example, an AFC for temperature measurement may indicate that the tag contains data for the temperature determination, that this data is in protected form, and the tag is able to store temperature values determined by the reader. There may also be more than one advanced functionalities provided by a tag, associated with one or more advanced functionality codes.

Fig. 2b shows the operation of a reader device for utilizing advanced functionality of an RFID tag. The reader device may request at phase 210 the RFID tag to send any advanced functionality code it has. This request may be a separate request or it may be a request according to a standard, whereby the tag interprets a standard request to mean that it should send the AFC. The reader device may then receive at 230 an advanced functionality code and determine that the tag is capable of providing the advanced functionality. Based on receiving the AFC, and/or based on other knowledge, the reader device then requests at 235 information from the tag, wherein the information is needed for using the advanced functionality. This information may be regular information provided by the tag according to a standard, or it may be additional information. The requesting may happen in a plurality of steps, or in one step. When the reader has received the information at 270, it may then use the information to utilize the advanced functionality according to the AFC at 275. For example, the reader may determine the temperature of a tag from timing responses of a tag by carrying out computations based on the response and/or accessing data tables. The reader may also improve the use of the information by utilizing other data indicated by the AFC. For example, the reader may use a key to access information stored on the tag for the temperature calculation.

The methods carried out by the RFID tag and the reader device may be interlinked so that some the method steps of the RFID tag happen in response to the method steps of the RFID reader device and vice versa.

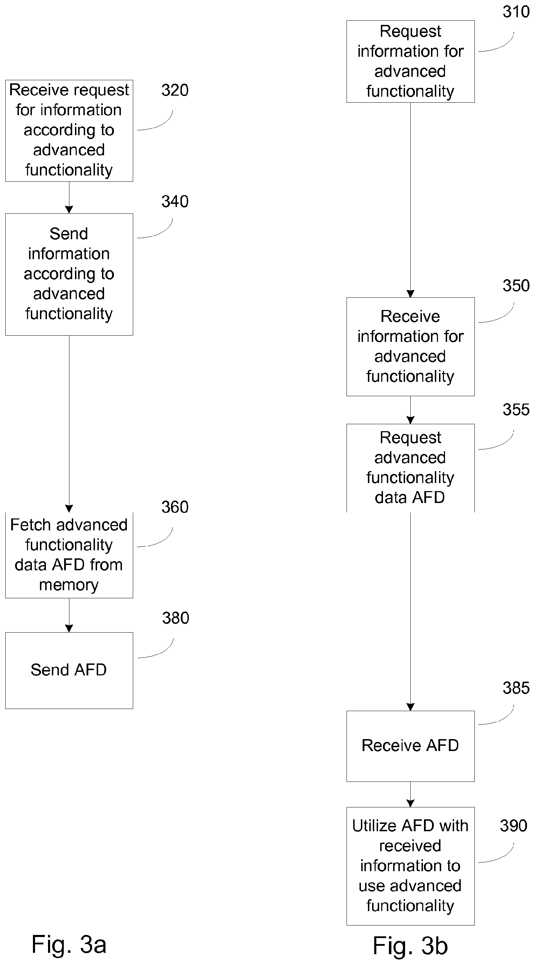

Figs. 3a and 3b show methods for employing advanced capabilities of a tag by using advanced capability data in the advanced processing at the tag and at a reader device. In Fig. 3a, the operation of an RFID tag is described. As described earlier, the tag may send information for utilizing an advanced capability according to an advanced capability code AFC. The sending of the information may also happen without any advanced capability code. The tag sends information related to an advanced capability in step 340, possibly as a response to a request from a reader received in step 320. Related to the use of advanced functionality, the tag may carry additional data for using the advanced functionality. For example, the tag may comprise data for a temperature measurement or another type of measurement, or the tag may contain a section of data that can be utilized in using the advanced capability. In phase 360, the tag may fetch the AFD from a memory either internal to the chip or in some other manner operatively connected to the tag. The tag then sends this advanced functionality data AFD to the reader device so that the AFD can be used or stored at the reader device and/or one or more other devices in the system for utilizing the advanced functionality.

The advanced functionality data AFD may be a data table or a data structure, functionality parameters, a definition of a mathematical function or any other data structure or object that may be used in utilizing the advanced functionality. For example, the AFD may comprise a single number, a series of numbers, a data table, a plurality of data tables, a data structure, an object definition and data, a database, and/or any combination of these alone or together with other information. The AFD may comprise a single packet of data, or the AFD may be distributed across a plurality of packets. The AFD may be complete and usable as such, or it may be such that it is augmented by other data and/or code that resides elsewhere in the system to save memory on the tag. The AFD may be intended to be used in the advanced functionality, or it may be intended for presenting the result of an advanced functionality (such as HTML code or XML representation, or a Adobe PDF file, Word document or Excel worksheet).

Fig 3b. shows the operation of a reader device in using advanced functionality data AFD. As described earlier, the reader device may at phase 310 request information relating to the advanced functionality, and receive the information at phase 350. This information may be received at any time during the employing of the advanced functionality, e.g. before, during or after any receiving of advanced functionality data. The reader may then, with respect to an AFC and/or based on other knowledge, at phase 355 request advanced functionality data from the RFID tag. The tag may also send the data on its own so that a request is not needed. The reader device then receives the AFD at phase 385 and utilizes the AFD with the received information to e.g. obtain an advanced functionality result in phase 390. The use of the AFD may happen at the reader device and/or elsewhere in the system. The AFD may be in protected form, whereby the reader device may form and/or use a key to access or decrypt the AFD before using it.

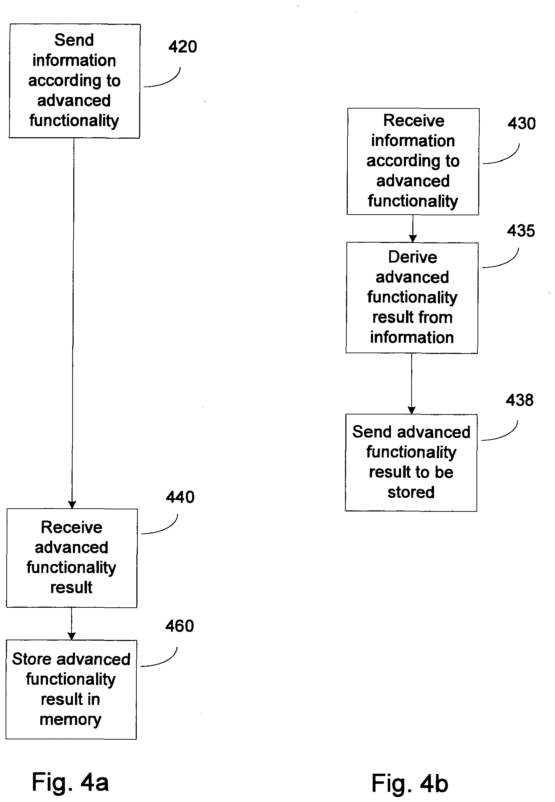

Figs. 4a and 4b show methods for carrying the results of the advanced capability computing on the tag itself and for storing the advanced capability results onto a tag by a reader. In Fig. 4a, the tag may at phase 420 send information relating to an advanced functionality so that a reader device can use this information to utilize the advanced functionality of the tag. An advanced functionality result may be derived by the reader and/or the rest of the system. The tag may at phase 440 receive the advanced functionality result alone or together with other data from the reader or from another device. The tag may then in phase 460 store this advanced functionality result into a memory together with earlier received advanced functionality results, with other data and/or alone. The tag may store the result as such or the tag may process the result or combine it with other data before storing the result. The tag may even form advanced functionality data AFD by using the received result. The tag may store the received data and/or result in a protected or unprotected form, e.g. by using an access password and/or encryption methods. There may be other information received and stored by the tag, too, such as time and location information. The tag may also send advanced functionality data to the reader. For example, the tag may receive the temperature determination result from the reader and store it onto its memory in protected form behind a password or in encrypted form.

In Fig. 4b, the operation of a reader device is shown in storing the advanced functionality result onto the tag. In phase 430, the reader receives information from the tag related to advanced functionality, as explained above, possibly with advanced functionality data AFD. The reader device and/or the rest of the system may then determine an advanced functionality result in phase 435, as explained earlier. The reader device and/or another device in the system may then choose to send the result back to the tag so that it can be stored on the tag in addition to or instead of storing it in the reader or in a database in the rest of the system. For example, the reader may send the result of a temperature computation to the tag so that the tag can store the temperature information at the tag. The reader may send other information than the result to the tag, too, for example location information and/or time information. This may allow the tag to e.g. store a temperature history with time and place of the item whose temperature is being monitored. This may be especially useful e.g. in cold chain management of perishable items.

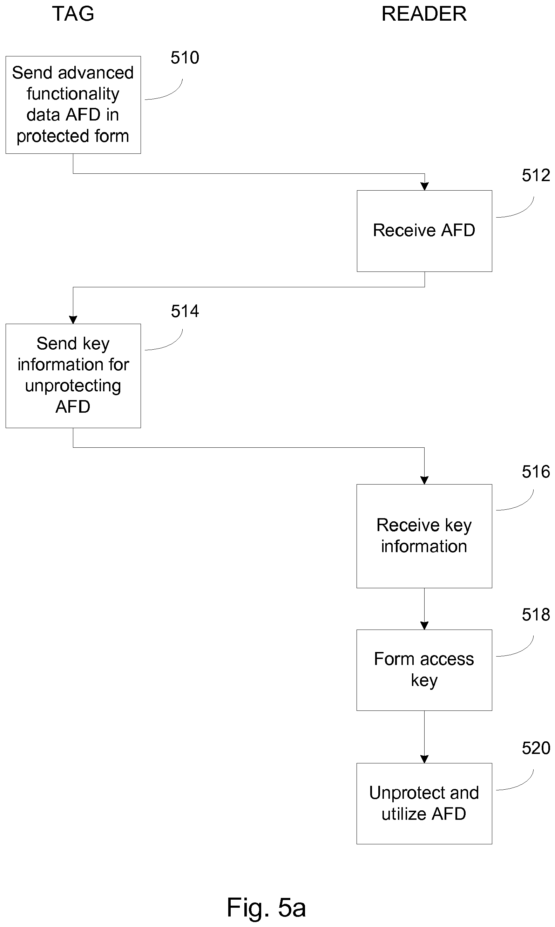

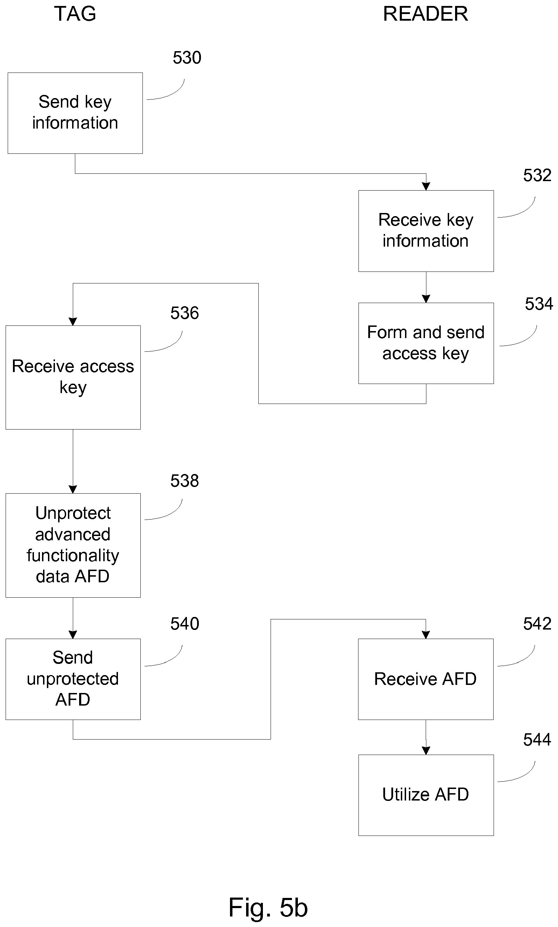

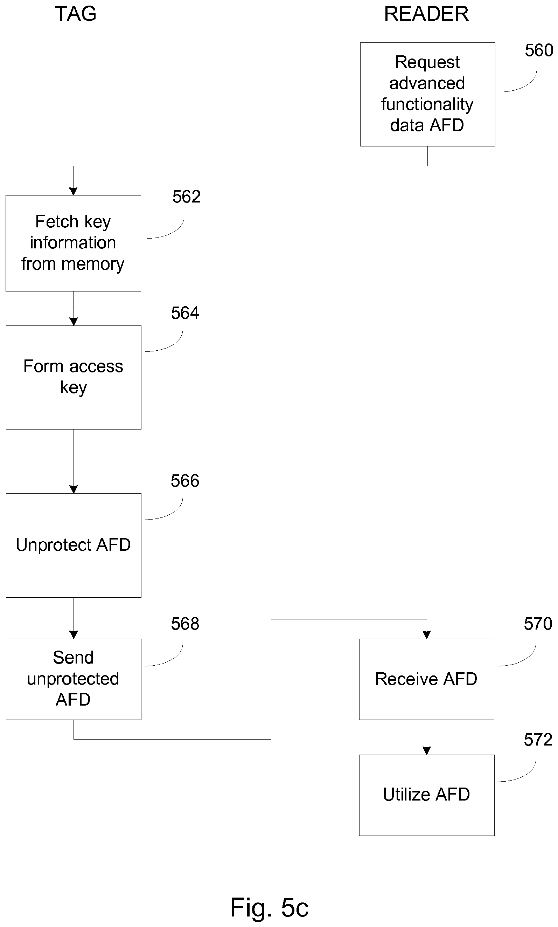

In Figs. 5a, 5b and 5c, using the advanced capabilities of a tag are described in a context where e.g. advanced functionality data is in protected form. The advanced functionality data may be in a protected form in either the tag memory, in the reader memory or in an external database. The protection may have been carried out so that the AFD resides in a memory area protected with an access key, or so that the AFD has been encrypted or scrambled using an algorithm dependent on an access key.

The access key may be stored on the tag memory or a seed for generating the access key may be stored on the tag memory. An algorithm may be used to generate the access key from the access key seed, wherein the algorithm is such that it is unlikely that two different algorithms would produce the same exact access key. Moreover, it may be desirable that the algorithm is such that two different seeds are unlikely to produce the same access key.

The seed or the access key may be a value stored on the tag, for example the electronic product code or part of it, the tag identification or part of it, or another unique identifier or a combination of these or any parts of these. As an example, the access key may be an EPC (electronic product code) Class I Gen2 compliant access key for accessing locked memory areas of the tag. The EPC access key may be calculated from the EPC on the tag e.g. with a hash function, an XOR function with a mask, as a digital digest or another cryptographic key. The EPC may also be used as an index to a table of access keys e.g. cryptographic keys. The length of the key may be less than the length of the seed, it may be the same length or it may be longer. For example, the EPC may be 96 to 240 bits long, and the access key may be 32 bits long. Bit puncturing may be used in shortening the key and bit padding may be used to lengthen the key. A memory area containing data for the advanced functionality, e.g. the AFD, may be locked using the access key and can only be opened using the access key formed from the EPC or another seed. The locking and opening or encryption and decryption may be done in a symmetric manner wherein the encryption and decryption keys are the same, or it may be done in asymmetric manner, where the keys are different. A public key infrastructure (PKI) may be used for the latter. Every tag in the system may have a different access key (if the EPC or other seed on the tag is different), and the reader or the system can calculate the access key using the seed from the tag. Using this access key, the reader or the system can access or decrypt the AFD located on the tag or in an external database.

As an example, temperature calculation may happen so that the reader requests information from the tag that it can use for temperature measurement, and in order to achieve a result, it uses data stored on the tag in the measurement. The reader may have determined by using an AFC that the tag is suitable for temperature measurement. The advanced functionality code AFC may be part of the electronic product code indicating, for example, that the item is a perishable product and therefore its temperature needs to be monitored. The AFD may be data for calculating or determining the temperature of the tag from local oscillator frequency shift polled from the tag. The reader may request the data from the tag, and the data may reside on the tag in protected form, e.g. on a protected memory area or in encrypted form. The reader therefore uses an algorithm to obtain an access key based on the EPC or tag identification, and then unprotects the data using this access key. The unprotecting may happen e.g. by opening a protected memory area on the tag or by decrypting the data. The unprotected data may then be used for calculating the tag temperature. The access key may also be used to write data onto the tag in protected form, e.g. in a protected memory area or in encrypted form.

The algorithm may be a secret algorithm known only to the reader device or the system, or it may be a widely public algorithm. The algorithm may depend on the advanced functionality code. The data protected on the tag may be advanced functionality data or it may be any other data.

Fig. 5a shows one method for employing advanced capabilities of a tag with advanced capability code and advanced capability information, and carrying the information on the tag in a protected form. In phase 510, the tag sends advanced functionality data AFD to the reader in protected form. The AFD may, in other words, be in encrypted or in scrambled form. The reader may then receive and store the AFD in phase 512. The tag may in phase 514 send key information to the reader device and/or the rest of the system. It is possible that this tag key information is the EPC or the tag identifier and the seed or actual key information resides in a database in the system. The reader and/or another element in the system may received this key information in phase 516. Using this key information, the reader or another element in the system may form an access key in phase 518. This access key may then be used in phase 520 to unprotect or decrypt the data received in phase 512, or to unprotect or decrypt other data related to the tag. The above phases may happen in the tag and at the reader or rest of the system in an independent manner or dependent from each other. The different phases may happen in another order than shown in Fig. 5a.

Fig. 5b shows one method for employing advanced capabilities of a tag with advanced capability code and advanced capability information, and carrying the information on the tag in a protected form. The tag may in phase 530 send key information to the reader device and/or the rest of the system. It is possible that this tag key information is the EPC or the tag identifier and the seed or actual key information resides in a database in the system. The reader and/or another element in the system may received this key information in phase 532. Using this key information, the reader or another element in the system may form an access key in phase 534 and send it to the tag. In phase 536, the tag may receive the access key and use it to unprotect or decrypt advanced functionality data AFD residing on the tag in phase 538. The tag may then send the unprotected AFD to the reader in phase 540. The reader may then receive the AFD in phase 542 and use it to utilize the advanced functionality in phase 544. The tag may unprotect and send other data than AFD using the access key. The above phases may happen in the tag and at the reader or rest of the system in an independent manner or dependent from each other. The different phases may happen in another order than shown in Fig. 5b.

Fig. 5c shows one method for employing advanced capabilities of a tag with advanced capability code and advanced capability information, and carrying the information on the tag in a protected form. In phase 560, the reader may request advanced functionality data AFD or other data from the tag. In phase 562, the tag may fetch key information (e.g. EPC) from memory, and form an access key in phase 564 using the key information. The tag may then in phase 566 unprotect advanced functionality data AFD residing in the tag memory by accessing a password-protected memory area or by decrypting the AFD. The tag may then send the unprotected AFD to the reader device in phase 568. The reader may receive the AFD in phase 570 and use it to utilize the advanced functionality provided by the tag in phase 572. The above phases may happen in the tag and at the reader or rest of the system in an independent manner or dependent from each other. The different phases may happen in another order than shown in Fig. 5c.

In the methods according to Figs. 5a, 5b and 5c, there may be other steps than the ones shown in the figures. For example, the advanced functionality code and its use and the storing of the advanced functionality result have been omitted.

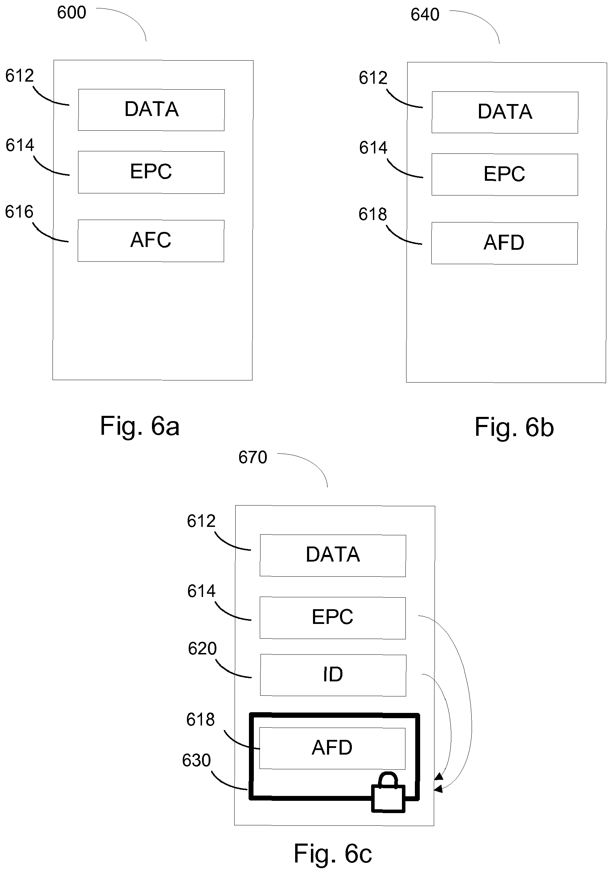

Figs. 6a, 6b and 6c show tags with an advanced capability code and advanced capability data, and with memory arranged to store information in encrypted form. In Fig. 6a, a tag 600 with advanced capability code is shown. The tag may comprise elements as described in the context of Fig. 1a, and has a memory for holding various pieces of information. There may be a data area 612 for any tag data, a memory 614 for the electronic product code and a memory 616 for the advanced capability code AFC. The various memory areas may be implemented in the same memory, or they may be implemented in different memories. Some of the memory may be read-only memory.

In Fig. 6b, a tag 640 with advanced capability data is shown. The tag comprises elements as described in the context of Fig. 1a, and has a memory for holding various pieces of information. There may be a data area 612 for any tag data, a memory 614 for the electronic product code and a memory 618 for the advanced capability data AFD. The various memory areas may be implemented in the same memory, or they may be implemented in different memories. Some of the memory may be read-only memory.

In Fig. 6c, a tag 670 with advanced capability data in protected form is shown. The tag comprises elements as described in the context of Fig. 1a, and has a memory for holding various pieces of information. There may be a data area 612 for any tag data, a memory 614 for the electronic product code and a memory 618 for the advanced capability data AFD. The various memory areas may be implemented in the same memory, or they may be implemented in different memories. Some of the memory may be read-only memory. The tag may also comprise a tag ID or other identification information. The data area 618 has been arranged to be such that the AFD is stored in protected form, for example in a password-protected or encrypted memory 630.

A tag may combine any or all functionalities as explained in the context of Figs. 6a, 6b and 6c.

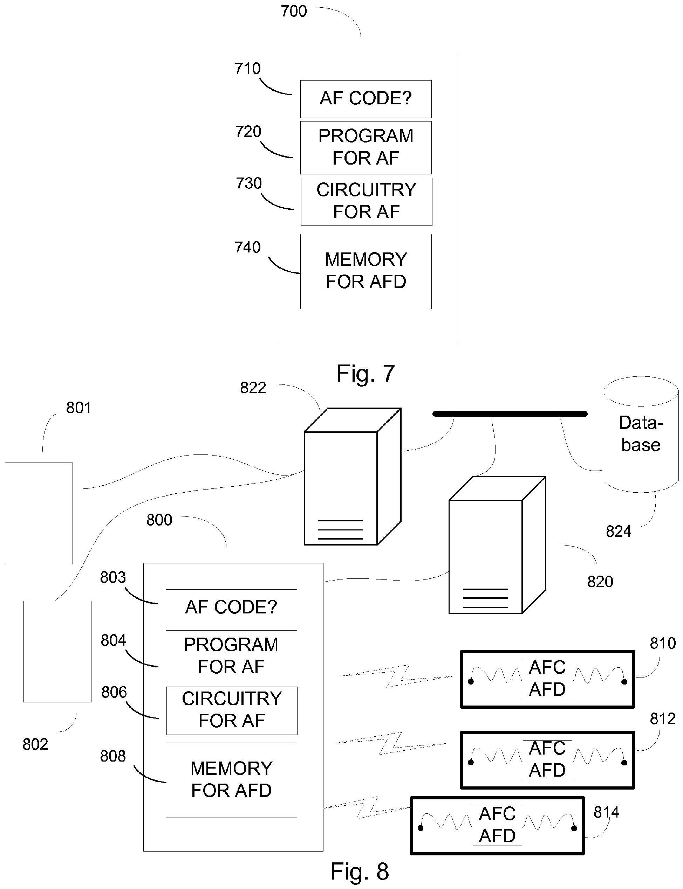

Fig. 7 shows a reader device 700 for employing advanced capabilities of a tag by using an advanced functionality code and advanced functionality data. The reader may comprise elements as described in the context of Fig. 1b, and has a memory for holding various pieces of information. The reader device may contain a block 710 for determining through the use of an advanced functionality code whether a tag is capable of an advanced functionality. The reader device may also contain a program 720 for utilizing advanced functionality. The reader device may implement all or some of the advanced functionality operations as circuitry 730, e.g. to increase speed. The reader device may also contain memory for holding advanced functionality data AFD received from an RFID tag. Furthermore, the reader device may comprise functionality for determining time and location information so that it can be associated with the advanced functionality results.

Fig. 8 shows a system for employing advanced capabilities of tags with a number of tags, reader devices and networked computers. The system may comprise a number of reader devices 800, 801 and 802. The reader devices may be geographically at the same location or at different locations. As explained in the context of Fig. 7, the reader devices may comprise blocks for determining the advanced functionality 803, advanced functionality program 804, circuitry for advanced functionality 806 and memory 808 for advanced functionality data. The system may comprise a number of tags 810, 812 and 814. The tags may be capable of similar or different advanced functionality, and may contain similar or different advanced functionality codes AFC and advanced functionality data AFD. Especially the advanced functionality data may be tag dependent, e.g. tag specific information. The system may also comprise a number of computers and/or servers 820 and 822 for providing a service related to the advanced functionality. The system may also comprise one or more databases for holding data and results related to the advanced functionality. The various elements of the system may be in a communication connection with each other, e.g. through a data network, or peer-to-peer connections from one element to another. The communication connections may be wired or wireless, e.g. an IP-based connection over a fixed network, a wireless local area network or a mobile communication network.

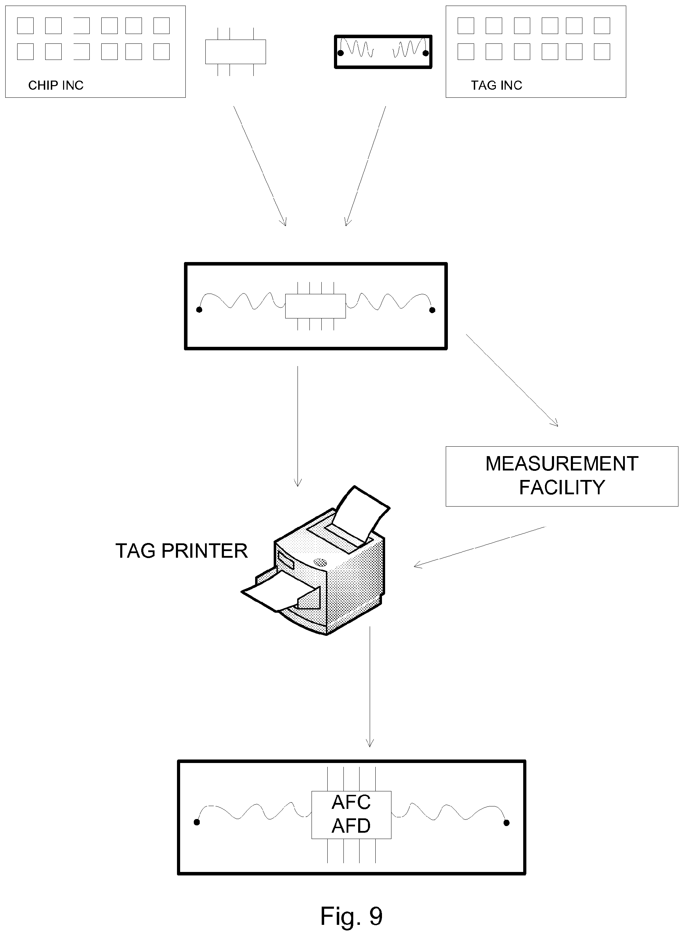

Fig. 9 shows a system for manufacturing tags with advanced capabilities. The chips 915 for the tags may be manufactured and/or programmed by one entity 910. The antennas and the protective layers 925 may be manufactured by one or more other entities 920. The different elements making up a tag may be then combined to form a tag 930. At the time of combining or at a different time, the properties tag may be measured at 940, for example to form advanced functionality data AFD to be stored into the tag memory. The tag may then be printed 950 at a facility where the tag is taken into use. The advanced functionality code AFC indicating the tag type and allowed operations, as well as the advanced functionality data AFD may be stored to the memory of the tag at this point, or the storing may happen at an earlier phase. The result of this process is a tag 960 with advanced functionality capability indicated by an AFC and supported by advanced functionality data AFD in the memory. The system in Fig. 9 may be implemented in a single facility by a single operator, or the different elements may be carried out at different locations.

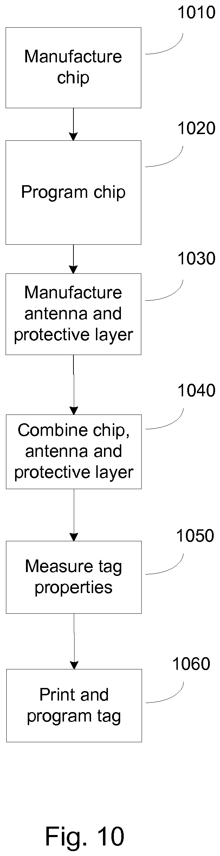

Fig. 10 shows a method for manufacturing tags with advanced capabilities. Some of all of the method steps may be carried out by a single entity, or the steps may be carried out by different entities. At phase 1010, the chip for the tag is manufactured so that it can provide an advanced functionality. At phase 1020, the chip is programmed, e.g. to contain program code and data for providing advanced functionality. At phase 1030, the antenna and the protective layer are manufactured. At phase 1040, the antenna and the protective layer are combined with the chip to form a tag. It is to be noted that for so-called passive tags, there will not be an energy source on the tag, that is, they will be energetically essentially passive. The tags will draw their energy essentially from the read-out signal, as explained earlier. At phase 1050, the properties of the tag may be measured for storing onto the tag or to be kept in a database for later access based on the tag identification. At phase 1060, the tag may be printed, that is, the tag may receive information such as an electronic product code. At phases 1040, 1050 and 1060, the tag may also receive advanced functionality data and an advanced functionality code.

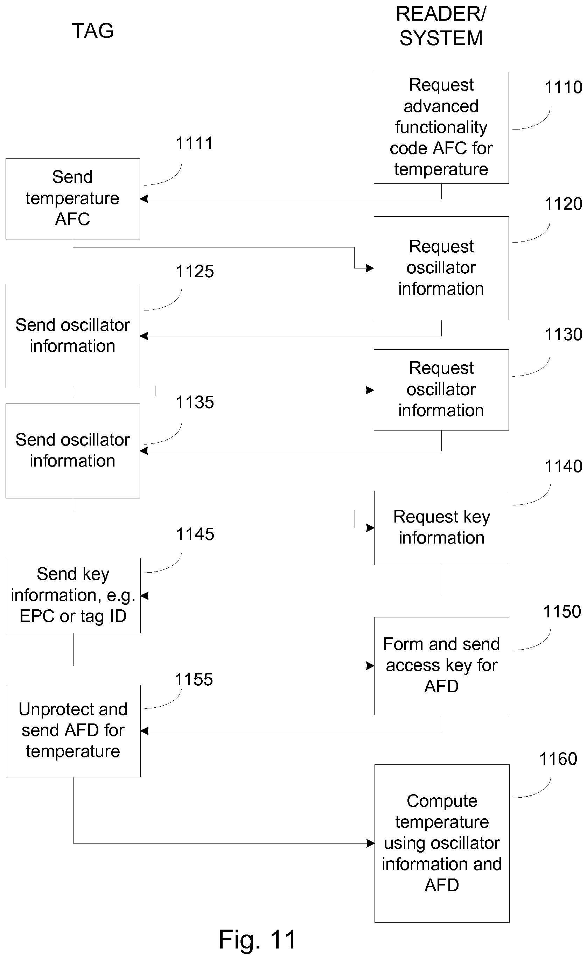

Fig. 11 shows temperature measurement arrangement as an illustration of utilizing an advanced capability of a tag. At phase 1110, the reader may request the tag to send an advanced functionality code AFC to indicate that the tag is capable of being used in a temperature measurement. In response to this request at phase 1115, or in response to a standard request, the tag may send an advanced functionality code AFC to indicate the type of the tag and the capabilities of the tag. For example, the AFC may indicate how accurate the temperature measurement with this tag may be. As explained earlier, the reader may at phase 1130 then request oscillator information to determine the temperature and the tag may respond at phase 1135 by sending this information. The steps 1130 and 1135 may be repeated as necessary. Using the received information, the reader may alone or with the help of the system determine the tag temperature based on knowledge of the local oscillator properties and the functionality of the tag. The local oscillator frequency changes with temperature, and this affects the oscillator information.

At phase 1140, the reader may then request key information such as the electronic product code, and the tag may send the requested information at phase 1145. The EPC may then be used to determine an access key that the reader may then send to the tag in phase 1150 to access advanced functionality data AFD for temperature. Using the access key, the RFID tag grants access to the data and sends the information to the reader or the rest of the system at phase 1155. It needs to be understood that this information may also reside in the system e.g. in a database, and the access key is then used to access this information from the database. When the reader or the system has the advanced functionality data for temperature, it may use them in determining the temperature at phase 1160, or it may at this phase compute the temperature using the AFD.

What has been described above in the various embodiments regarding RFID tags is often implemented by a chip on the RFID tag. Therefore, one target of the invention is an RFID chip providing advanced functionality by RFID tags.

The various embodiments of the invention can be implemented with the help of computer program code that resides in a memory and causes the relevant apparatuses to carry out the invention. For example, a tag, a chip or a reader device may comprise circuitry and electronics for handling, receiving and transmitting data, computer program code in a memory, and a processor that, when running the computer program code, causes the reader device to carry out the features of an embodiment. Alternatively or in addition, a tag or a chip for a tag or a reader device may comprise logic circuitry for implementing the same functionality as may be carried out by means of program code run on a processor. Yet further, a network device may comprise circuitry and electronics for handling, receiving and transmitting data, computer program code in a memory, and a processor that, when running the computer program code, causes the network device to carry out the features of an embodiment. A system may comprise any number of tags of the same kind or different kinds, and reader devices and network computers in any combination.

It is clear that the present invention is not limited solely to the above-presented embodiments, but it can be modified within the scope of the appended claims.

## Claims

1. A method for utilizing advanced functionality of an RFID device (100), said advanced functionality being functionality other than providing an identification (614, 620), said RFID device being energetically passive, the method comprising:
- receiving an advanced functionality code (616) from said RFID device (100), said advanced functionality code (616) indicating that said RFID device (100) provides said advanced functionality, and said advanced functionality code enabling a reader (800) to adjust its operation according to said advanced functionality,
- requesting information from said RFID device (100), said information relating to said advanced functionality, and
- based on said received advanced functionality code (616), utilizing said advanced functionality by using said requested information.

2. A method according to claim 1, wherein utilizing said advanced functionality comprises determining a temperature measurement value, and said requested information comprises a signal indicative of said temperature measurement value, and the method further comprises:
- determining whether said received advanced functionality code (616) indicates that said RFID device (100) is capable of being used for said advanced functionality of temperature measurement, and
- in response to said determining indicating that said RFID device (100) is capable of being used for said advanced functionality of temperature measurement, calculating said temperature measurement value using said requested information.

3. A method according to claim 1 or 2, further comprising:
- requesting an advanced functionality code (616) from said RFID device (100).

4. A method according to any of the claims 1, 2 and 3, the method comprising:
- receiving advanced functionality data (618) from said RFID device (100), said advanced functionality data (618) being stored on said RFID device, and said advanced functionality data being specific to the RFID device (100),
- requesting information from said RFID device (100), said information relating to said advanced functionality, and said information being different from said advanced functionality data (618), and
- using said received advanced functionality data (618) in using said requested information for utilizing said advanced functionality in a distributed manner.

5. A reader apparatus (800) for utilizing advanced functionality of an RFID device (100), said RFID device being energetically passive, said advanced functionality being functionality other than providing an identification (614, 620), said reader (800) comprising a processor, memory including computer program code, the memory and the computer program code configured to, with the at least one processor, cause the reader apparatus (800) to:
- receive an advanced functionality code (616) from said RFID device (100), said advanced functionality code (616) indicating that said RFID device (100) provides said advanced functionality, and said advanced functionality code enabling said reader (800) to adjust its operation according to said advanced functionality,
- request information from said RFID device (100), said information relating to said advanced functionality, and
- based on said received advanced functionality code (616), utilize said advanced functionality by using said requested information.

6. An apparatus (800) according to claim 5, further comprising computer program code configured to, with the at least one processor, cause the apparatus (800) to:
- determine whether said received advanced functionality code (616) indicates that said RFID devices capable of being used for advanced functionality of temperature measurement, and
- in response to said determining indicating that said RFID device (100) is capable of being used for said advanced functionality of temperature measurement, calculate a temperature measurement value using said requested information.

7. An apparatus (800) according to claim 5 or 6, further comprising computer program code configured to, with the at least one processor, cause the apparatus (800) to:
- request an advanced functionality code (616) from said RFID device (100).

8. A reader apparatus (800) according to any of the claims 5, 6 and 7, further comprising computer program code configured to, with the at least one processor, cause the apparatus (800) to:
- receive advanced functionality data (618) from said RFID device, said advanced functionality data being stored on said RFID device, and said advanced functionality data being specific to the RFID device (100),
- request information from said RFID device (100), said information relating to said advanced functionality and said information being different from said advanced functionality data (618), and
- use said received advanced functionality data (618) in using said requested information for utilizing said advanced functionality in a distributed manner.

9. An apparatus (800) according to any of the claims 5 to 8 further comprising computer program code configured to, with the at least one processor, cause the apparatus (800) to:
- derive an advanced functionality result by utilizing said advanced functionality of said RFID device (100), and
- send said advanced functionality result to said RFID device (100) for storing said advanced functionality result onto a memory (122).

10. An apparatus (800) according to claim 9, further comprising computer program code configured to, with the at least one processor, cause the apparatus to:
- send at least one of a location information and a time information to said RFID device (100) for storing said advanced functionality result onto a memory (122) in association with said advanced functionality information.

11. A method for providing advanced functionality by an RFID device (100) to a reader device (800), said advanced functionality being functionality other than providing an identification (614, 620), said RFID device (100) being energetically passive, the method comprising:
- sending an advanced functionality code (616) from said RFID device (100) to said reader device (800), said advanced functionality code (616) indicating that said RFID device (100) provides said advanced functionality, and said advanced functionality code enabling said reader device (800) to adjust its operation according to said advanced functionality,
- receiving a request for information according to said advanced functionality code (616) from said reader device (800), said information relating to said advanced functionality, and
- sending said requested information according to said advanced functionality code (616) to said reader device (800) for utilizing said advanced functionality.

12. A method according to claim 11, the method further comprising:
- accessing a local memory (122) to obtain advanced functionality data (618) associated with said requested information, said advanced functionality data being specific to the RFID device (100), said information relating to said advanced functionality, and said information being different from said advanced functionality data (618), and
- sending said advanced functionality data (618) from said RFID device (100) to a reader device (800) for use in processing said requested information.

13. A method according to claim 11 or 12, wherein
- the reader device being part of a network system,
- said advanced functionality comprises advanced functionality of temperature measurement,
- said information being indicative of temperature,
- said requested information being accessible by said network system, said information to be used for forming a temperature value, and
the method further comprising
- storing a temperature value to a memory in said network system, wherein said temperature value having been formed from said requested information by processing.

14. A method according to claim 13, further comprising:
- accessing a local memory (122) at an RFID device (100) to obtain advanced functionality data (618) associated with said requested information, said advanced functionality data (618) to be used for temperature measurement, and
- sending said advanced functionality data (618) from said RFID device (100) for use in processing said requested information.

15. An RFID device (100), said RFID device (100) being energetically passive and arranged to operate by using energy from a received wireless signal, and said RFID device comprising an antenna, logic circuitry such as a logic gate arrangement or a processor and memory including computer program code executable on said processor, the logic circuitry or computer program code configured to cause the RFID device (100) to:
- send an advanced functionality code (616) from said RFID device (100) to a reader device (800), said advanced functionality code (616) indicating that said RFID device (100) provides said advanced functionality, said advanced functionality being functionality other than providing an identification (614, 620), and said advanced functionality code enabling a reader (800) to adjust its operation according to said advanced functionality,
- receive a request for information according to said advanced functionality code (616) from said reader device (800), said information relating to said advanced functionality, and
- send said requested information according to said advanced functionality code (616) to said remote-access reader (800) for utilizing said advanced functionality.

16. An RFID device according to claim 15, further comprising logic circuitry or computer program code configured to cause the RFID device to:
- access a local memory (122) to obtain advanced functionality data (618) associated with said requested information, said advanced functionality data being specific to the RFID device (100), said information relating to said advanced functionality, and said information being different from said advanced functionality data (618), and
- send said advanced functionality data (618) from said RFID device (100) to a reader device (800) for use in processing said requested information.

17. An RFID device (100) according to claim 16, said RFID device (100) further comprising logic circuitry such as a logic gate arrangement or a processor and memory including computer program code executable on said processor, the logic circuitry or computer program code configured to cause the RFID device (100) to:
- send information according to said advanced functionality to said reader device (800) for deriving an advanced functionality result,
- receive said advanced functionality result from said reader device (800), and
- store said advanced functionality result onto a memory (122).

18. A method of manufacturing an energetically passive RFID device, the method comprising:
- combining at least a chip and an antenna to form an RFID device (100),
- forming identification data (614, 620) into a memory of the RFID device, **characterized in that** the method comprises:
- forming an advanced capability code (616) onto the RFID device (100) for sending the advanced functionality code (616) from the RFID device (100) to a reader device (800), wherein the advanced capability code (616) is indicative of an advanced capability of the RFID device (100), said advanced capability being capability other than providing an identification (614, 620), and said identification data (614, 620) being different from said advanced capability code (616).

19. A computer program product embodied on a computer readable medium, said computer program product comprising computer program code, said computer program code arranged to, when executed on a processor, to carry out the method according to any of the claims 1-4 or 11-14.

20. A method according to any of the claims 1-4 or 11-14, wherein the RFID device is an RFID tag.

21. An apparatus or device according to any of the claims 5-10 or 15-17, wherein the RFID device is an RFID tag.

## Patentansprüche

1. Verfahren zur Nutzung einer fortgeschrittenen Funktionalität einer RFID-Vorrichtung (100), wobei die fortgeschrittene Funktionalität eine andere Funktionalität ist als das Bereitstellen einer Identifikation (614, 620), wobei die RFID-Vorrichtung energetisch passiv ist, wobei das Verfahren Folgendes umfasst:
- Empfangen eines Codes der fortgeschrittenen Funktionalität (616) von der RFID-Vorrichtung (100), wobei der Code der fortgeschrittenen Funktionalität (616) anzeigt, dass die RFID-Vorrichtung (100) die fortgeschrittene Funktionalität zur Verfügung stellt, und es der Code der fortgeschrittenen Funktionalität einem Leser (800) ermöglicht, seinen Betrieb gemäß der fortgeschrittenen Funktionalität einzustellen,
- Anfordern von Informationen von der RFID-Vorrichtung (100), wobei sich die Informationen auf die fortgeschrittene Funktionalität beziehen, und
- basierend auf dem empfangenen Code der fortgeschrittenen Funktionalität (616), Nutzen der fortgeschrittenen Funktionalität durch Verwendung der angeforderten Informationen.

2. Verfahren gemäß Anspruch 1, wobei das Nutzen der fortgeschrittenen Funktionalität das Bestimmen eines Temperaturmesswertes umfasst und die angeforderten Informationen ein Signal umfassen, das den Temperaturmesswert anzeigt, und wobei das Verfahren ferner Folgendes umfasst:
- Bestimmen, ob der empfangene Code der fortgeschrittenen Funktionalität (616) anzeigt, dass die RFID-Vorrichtung (100) in der Lage ist, für die fortgeschrittene Funktionalität der Temperaturmessung verwendet zu werden, und
- in Reaktion auf das Bestimmen des Anzeigens, ob die RFID-Vorrichtung (100) in der Lage ist, für die fortgeschrittene Funktionalität der Temperaturmessung verwendet zu werden, Berechnen des Temperaturmesswertes unter Verwendung der angeforderten Informationen.

3. Verfahren nach Anspruch 1 oder 2, ferner umfassend:
- Anfordern eines Codes der fortgeschrittenen Funktionalität (616) von der RFID-Vorrichtung (100).

4. Verfahren gemäß einem der Ansprüche 1, 2 und 3, wobei das Verfahren Folgendes umfasst:
- Empfangen von Daten der fortgeschrittenen Funktionalität (618) von der RFID-Vorrichtung (100), wobei die Daten der fortgeschrittenen Funktionalität (618) in der RFID-Vorrichtung gespeichert sind und die Daten der fortgeschrittenen Funktionalität für die RFID-Vorrichtung (100) spezifisch sind,
- Anfordern von Informationen von der RFID-Vorrichtung (100), wobei sich die Informationen auf die fortgeschrittene Funktionalität beziehen und sich die Informationen von den Daten der fortgeschrittenen Funktionalität (618) unterscheiden, und
- Verwenden der empfangenen Daten der fortgeschrittenen Funktionalität (618) bei der Verwendung der angeforderten Informationen zum Nutzen der fortgeschrittenen Funktionalität auf verteilte Weise.

5. Lesegerät (800) zum Nutzen einer fortgeschrittenen Funktionalität einer RFID-Vorrichtung (100), wobei die RFID-Vorrichtung energetisch passiv ist, wobei die fortgeschrittene Funktionalität eine andere Funktionalität ist als das Bereitstellen einer Identifikation (614, 620), wobei der Leser (800) einen Prozessor und einen Speicher mit einem Computerprogrammcode umfasst, wobei der Speicher und der Computerprogrammcode dafür ausgelegt sind, mit dem mindestens einen Prozessor das Lesegerät (800) dazu zu veranlassen:
- einen Code der fortgeschrittenen Funktionalität (616) von der RFID-Vorrichtung (100) zu empfangen, wobei der Code der fortgeschrittenen Funktionalität (616) anzeigt, dass die RFID-Vorrichtung (100) die fortgeschrittene Funktionalität zur Verfügung stellt, und es der Code der fortgeschrittenen Funktionalität dem Leser (800) ermöglicht, seinen Betrieb gemäß der fortgeschrittenen Funktionalität einzustellen,
- Informationen von der RFID-Vorrichtung (100) anzufordern, wobei sich die Informationen auf die fortgeschrittene Funktionalität beziehen, und
- basierend auf dem empfangenen Code der fortgeschrittenen Funktionalität (616), die fortgeschrittene Funktionalität durch Verwendung der angeforderten Informationen zu nutzen.

6. Gerät (800) gemäß Anspruch 5, ferner umfassend einen Computerprogrammcode, der dafür ausgelegt ist, mit dem mindestens einen Prozessor das Gerät (800) dazu zu veranlassen:
- zu bestimmen, ob der empfangene Code der fortgeschrittenen Funktionalität (616) anzeigt, dass die RFID-Vorrichtungen in der Lage sind, für die fortgeschrittene Funktionalität der Temperaturmessung verwendet zu werden, und
- in Reaktion auf das Bestimmen des Anzeigens, ob die RFID-Vorrichtung (100) in der Lage ist, für die fortgeschrittene Funktionalität der Temperaturmessung verwendet zu werden, einen Temperaturmesswert unter Verwendung der angeforderten Informationen zu berechnen.

7. Gerät (800) gemäß Anspruch 5 oder 6, ferner umfassend einen Computerprogrammcode, der dafür ausgelegt ist, mit dem mindestens einen Prozessor das Gerät (800) dazu zu veranlassen:
- einen Code der fortgeschrittenen Funktionalität (616) von der RFID-Vorrichtung (100) anzufordern.

8. Lesegerät (800) gemäß einem der Ansprüche 5, 6 und 7, ferner umfassend einen Computerprogrammcode, der dafür ausgelegt ist, mit dem mindestens einen Prozessor das Gerät (800) dazu zu veranlassen:
- Daten der fortgeschrittenen Funktionalität (618) von der RFID-Vorrichtung zu empfangen, wobei die Daten der fortgeschrittenen Funktionalität in der RFID-Vorrichtung gespeichert sind und die Daten der fortgeschrittenen Funktionalität für die RFID-Vorrichtung (100) spezifisch sind,
- Informationen von der RFID-Vorrichtung (100) anzufordern, wobei sich die Informationen auf die fortgeschrittene Funktionalität beziehen und sich die Informationen von den Daten der fortgeschrittenen Funktionalität (618) unterscheiden, und
- die empfangenen Daten der fortgeschrittenen Funktionalität (618) bei der Verwendung der angeforderten Informationen zum Nutzen der fortgeschrittenen Funktionalität auf verteilte Weise zu verwenden.

9. Lesegerät (800) gemäß einem der Ansprüche 5 bis 8, ferner umfassend einen Computerprogrammcode, der dafür ausgelegt ist, mit dem mindestens einen Prozessor das Gerät (800) dazu zu veranlassen:
- ein Ergebnis der fortgeschrittenen Funktionalität durch Nutzen der fortgeschrittenen Funktionalität der RFID-Vorrichtung (100) herzuleiten, und
- das Ergebnis der fortgeschrittenen Funktionalität zum Speichern des Ergebnisses der fortgeschrittenen Funktionalität in einem Speicher (122) an die RFID-Vorrichtung (100) zu senden.

10. Gerät (800) gemäß Anspruch 9, ferner umfassend einen Computerprogrammcode, der dafür ausgelegt ist, mit dem mindestens einen Prozessor das Gerät dazu zu veranlassen:
- mindestens eine von der Positionsinformation und einer Zeitinformation zum Speichern des Ergebnisses der fortgeschrittenen Funktionalität in einem Speicher (122) in Zuordnung zu den Informationen der fortgeschrittenen Funktionalität an die RFID-Vorrichtung (100) zu senden.

11. Verfahren zum Bereitstellen einer fortgeschrittenen Funktionalität einem Lesegerät (800) durch eine RFID-Vorrichtung (100), wobei die fortgeschrittene Funktionalität eine andere Funktionalität ist als das Bereitstellen einer Identifikation (614, 620), wobei die RFID-Vorrichtung (100) energetisch passiv ist, wobei das Verfahren Folgendes umfasst:
- Senden eines Codes der fortgeschrittenen Funktionalität (616) von der RFID-Vorrichtung (100) an das Lesegerät (800), wobei der Code der fortgeschrittenen Funktionalität (616) anzeigt, dass die RFID-Vorrichtung (100) die fortgeschrittene Funktionalität zur Verfügung stellt, und es der Code der fortgeschrittenen Funktionalität der Lesevorrichtung (800) ermöglicht, ihren Betrieb gemäß der fortgeschrittenen Funktionalität einzustellen,
- Empfangen einer Anforderung von Informationen gemäß dem Code der fortgeschrittenen Funktionalität (616) von der Lesevorrichtung (800), wobei sich die Informationen auf die fortgeschrittene Funktionalität beziehen, und
- Senden der angeforderten Informationen gemäß dem Code der fortgeschrittenen Funktionalität (616) an die Lesevorrichtung (800) zum Nutzen der fortgeschrittenen Funktionalität.

12. Verfahren gemäß Anspruch 11, wobei das Verfahren ferner Folgendes umfasst:
- Zugreifen auf einen lokalen Speicher (122), um Daten der fortgeschrittenen Funktionalität (618), die den angeforderten Informationen zugeordnet sind, zu erhalten, wobei die Daten der fortgeschrittenen Funktionalität für die RFID-Vorrichtung (100) spezifisch sind, wobei sich die Informationen auf die fortgeschrittene Funktionalität beziehen und sich die Informationen von den Daten der fortgeschrittenen Funktionalität (618) unterscheiden, und
- Senden der Daten der fortgeschrittenen Funktionalität (618) von der RFID-Vorrichtung (100) an eine Lesevorrichtung (800) zur Verwendung bei der Verarbeitung der angeforderten Informationen.

13. Verfahren gemäß Anspruch 11 oder 12, wobei
- die Lesevorrichtung Teil eines Netzsystems ist,
- die fortgeschrittene Funktionalität eine fortgeschrittene Funktionalität der Temperaturmessung umfasst,
- die Informationen eine Temperatur anzeigen,
- die angeforderten Informationen für das Netzsystem zugänglich sind, wobei die Informationen zum Bilden eines Temperaturwertes verwendet werden sollen, und
wobei das Verfahren ferner Folgendes umfasst
- Speichern eines Temperaturwertes in einem Speicher des Netzsystems, wobei der Temperaturwert durch Verarbeitung aus den angeforderten Informationen gebildet worden ist.

14. Verfahren gemäß Anspruch 13, ferner umfassend:
- Zugreifen auf einen lokalen Speicher (122) an einer RFID-Vorrichtung (100), um Daten der fortgeschrittenen Funktionalität (618) zu erhalten, die den angeforderten Informationen zugeordnet sind, wobei die Daten der fortgeschrittenen Funktionalität (618) zur Temperaturmessung verwendet werden sollen, und
- Senden der Daten der fortgeschrittenen Funktionalität (618) von der RFID-Vorrichtung (100) zur Verwendung bei der Verarbeitung der angeforderten Informationen.

15. RFID-Vorrichtung (100), wobei die RFID-Vorrichtung (100) energetisch passiv und so angeordnet ist, dass sie durch Verwendung von Energie von einem empfangenen drahtlosen Signal arbeitet, und wobei die RFID-Vorrichtung eine Antenne, eine Logikschaltung, wie eine Gatterschaltungsanordnung, oder einen Prozessor und einen Speicher, der einen Computerprogrammcode enthält, der auf dem Prozessor ausführbar ist, umfasst, wobei die Logikschaltung oder der Computerprogrammcode dafür ausgelegt ist, die RFID-Vorrichtung (100) dazu zu veranlassen:
- einen Code der fortgeschrittenen Funktionalität (616) von der RFID-Vorrichtung (100) an eine Lesevorrichtung (800) zu senden, wobei der Code der fortgeschrittenen Funktionalität (616) anzeigt, dass die RFID-Vorrichtung (100) die fortgeschrittene Funktionalität zur Verfügung stellt, wobei die fortgeschrittene Funktionalität eine andere Funktionalität ist als das Bereitstellen einer Identifikation (614, 620), und wobei es der Code der fortgeschrittenen Funktionalität einem Leser (800) ermöglicht, seinen Betrieb gemäß der fortgeschrittenen Funktionalität einzustellen,
- eine Anforderung von Informationen gemäß dem Code der fortgeschrittenen Funktionalität (616) von der Lesevorrichtung (800) zu empfangen, wobei sich die Informationen auf die fortgeschrittene Funktionalität beziehen, und
- die angeforderten Informationen gemäß dem Code der fortgeschrittenen Funktionalität (616) an das Fernzugriffs-Lesegerät (800) zum Nutzen der fortgeschrittenen Funktionalität zu senden.

16. RFID-Vorrichtung gemäß Anspruch 15, ferner umfassend eine Logikschaltung oder einen Computerprogrammcode, die/der dafür ausgelegt ist, die RFID-Vorrichtung zu veranlassen:
- auf einen lokalen Speicher (122) zuzugreifen, um Daten der fortgeschrittenen Funktionalität (618), die den angeforderten Informationen zugeordnet sind, zu erhalten, wobei die Daten der fortgeschrittenen Funktionalität für die RFID-Vorrichtung (100) spezifisch sind, wobei sich die Informationen auf die fortgeschrittene Funktionalität beziehen und sich die Informationen von den Daten der fortgeschrittenen Funktionalität (618) unterscheiden, und
- die Daten der fortgeschrittenen Funktionalität (618) von der RFID-Vorrichtung (100) zur Verwendung bei der Verarbeitung der angeforderten Informationen an eine Lesevorrichtung (800) zu senden.

17. RFID-Vorrichtung (100) gemäß Anspruch 16, wobei die RFID-Vorrichtung (100) ferner eine Logikschaltung, wie eine Gatterschaltungsanordnung oder einen Prozessor und einen Speicher, der einen Computerprogrammcode enthält, der auf dem Prozessor ausführbar ist, umfasst, wobei die Logikschaltung oder der Computerprogrammcode dafür ausgelegt ist, die RFID-Vorrichtung (100) zu veranlassen:
- Informationen gemäß der fortgeschrittenen Funktionalität zum Herleiten eines Ergebnisses der fortgeschrittenen Funktionalität an die Lesevorrichtung (800) zu senden,
- das Ergebnis der fortgeschrittenen Funktionalität von der Lesevorrichtung (800) zu empfangen, und
- das Ergebnis der fortgeschrittenen Funktionalität in einem Speicher (122) zu speichern.

18. Herstellungsverfahren für eine energetisch passive RFID-Vorrichtung, wobei das Verfahren Folgendes umfasst:
- Kombinieren mindestens eines Chips und einer Antenne, um eine RFID-Vorrichtung (100) zu bilden,
- Erzeugen von Identifikationsdaten (614, 620) in einem Speicher der RFID-Vorrichtung, **dadurch gekennzeichnet, dass** das Verfahren Folgendes umfasst:
- Bilden eines Codes der fortgeschrittenen Fähigkeit (616) in der RFID-Vorrichtung (100) zum Senden des Codes der fortgeschrittenen Funktionalität (616) von der RFID-Vorrichtung (100) an eine Lesevorrichtung (800), wobei der Code der fortgeschrittenen Fähigkeit (616) eine fortgeschrittene Fähigkeit der RFID-Vorrichtung (100) anzeigt, wobei die fortgeschrittene Fähigkeit eine andere Fähigkeit ist als das Bereitstellen einer Identifikation (614, 620), und sich die Identifikationsdaten (614, 620) von dem Code der fortgeschrittenen Fähigkeit (616) unterscheiden.

19. Computerprogrammprodukt, das auf einem computerlesbaren Medium ausgebildet ist, wobei das Computerprogrammprodukt einen Computerprogrammcode umfasst, wobei der Computerprogrammcode so angeordnet ist, dass er, wenn er auf einem Prozessor ausgeführt wird, das Verfahren gemäß einem der Ansprüche 1-4 oder 11-14 ausführt.

20. Verfahren gemäß einem der Ansprüche 1-4 oder 11-14, wobei die RFID-Vorrichtung ein RFID-Tag ist.

21. Gerät oder Vorrichtung gemäß einem der Ansprüche 5-10 oder 15-17, wobei die RFID-Vorrichtung ein RFID-Tag ist.

## Revendications

1. Un procédé destiné à l'utilisation d'une fonctionnalité avancée d'un dispositif RFID (100), ladite fonctionnalité avancée étant une fonctionnalité autre que la fourniture d'une identification (614, 620), ledit dispositif RFID étant énergétiquement passif, le procédé comprenant :
- la réception d'un code de fonctionnalité avancée (616) à partir dudit dispositif RFID (100), ledit code de fonctionnalité avancée (616) indiquant que ledit dispositif RFID (100) fournit ladite fonctionnalité avancée, et ledit code de fonctionnalité avancée permettant à un lecteur (800) d'ajuster son fonctionnement en fonction de ladite fonctionnalité avancée,
- la demande d'informations à partir dudit dispositif RFID (100), lesdites informations portant sur ladite fonctionnalité avancée, et
- en fonction dudit code de fonctionnalité avancée reçu (616), l'utilisation de ladite fonctionnalité avancée par l'utilisation desdites informations demandées.

2. Un procédé selon la revendication 1, dans lequel l'utilisation de ladite fonctionnalité avancée comprend la détermination d'une valeur de mesure de température, et lesdites informations demandées comprennent un signal indicatif de ladite valeur de mesure de température, et le procédé comprend en outre :
- la détermination si ledit code de fonctionnalité avancée reçu (616) indique que ledit dispositif RFID (100) est apte à être utilisé pour ladite fonctionnalité avancée de mesure de température, et
- en réponse à ladite détermination indiquant que ledit dispositif RFID (100) est apte à être utilisé pour ladite fonctionnalité avancée de mesure de température, le calcul de ladite valeur de mesure de température au moyen desdites informations demandées.

3. Un procédé selon la revendication 1 ou 2, comprenant en outre :
- la demande d'un code de fonctionnalité avancée (616) à partir dudit dispositif RFID (100).

4. Un procédé selon l'une quelconque des revendications 1, 2 et 3, le procédé comprenant :
- la réception de données de fonctionnalité avancée (618) à partir dudit dispositif RFID (100), lesdites données de fonctionnalité avancée (618) étant conservées en mémoire sur ledit dispositif RFID, et lesdites données de fonctionnalité avancée étant spécifiques au dispositif RFID (100),
- la demande d'informations à partir dudit dispositif RFID (100), lesdites informations portant sur ladite fonctionnalité avancée, et lesdites informations étant différentes desdites données de fonctionnalité avancée (618), et
- l'utilisation desdites données de fonctionnalité avancée reçues (618) dans l'utilisation desdites informations demandées de façon à utiliser ladite fonctionnalité avancée d'une manière distribuée.

5. Un appareil de lecture (800) destiné à l'utilisation d'une fonctionnalité avancée d'un dispositif RFID (100), ledit dispositif RFID étant énergétiquement passif, ladite fonctionnalité avancée étant une fonctionnalité autre que la fourniture d'une identification (614, 620), ledit lecteur (800) comprenant un processeur, une mémoire comprenant du code de programme informatique, la mémoire et le code de programme informatique étant configurés de façon à, avec le au moins un processeur, amener l'appareil de lecture (800) à :
- recevoir un code de fonctionnalité avancée (616) à partir dudit dispositif RFID (100), ledit code de fonctionnalité avancée (616) indiquant que ledit dispositif RFID (100) fournit ladite fonctionnalité avancée, et ledit code de fonctionnalité avancée permettant audit lecteur (800) d'ajuster son fonctionnement en fonction de ladite fonctionnalité avancée,
- demander des informations audit dispositif RFID (100), lesdites informations portant sur ladite fonctionnalité avancée, et
- en fonction dudit code de fonctionnalité avancée reçu (616), utiliser ladite fonctionnalité avancée par l'utilisation desdites informations demandées.

6. Un appareil (800) selon la revendication 5, comprenant en outre du code de programme informatique configuré de façon à, avec le au moins un processeur, amener l'appareil (800) à :
- déterminer si ledit code de fonctionnalité avancée reçu (616) indique que lesdits dispositifs RFID sont aptes à être utilisés pour une fonctionnalité avancée de mesure de température, et
- en réponse à ladite détermination indiquant que ledit dispositif RFID (100) est apte à être utilisé pour ladite fonctionnalité avancée de mesure de température, calculer une valeur de mesure de température au moyen desdites informations demandées.

7. Un appareil (800) selon la revendication 5 ou 6, comprenant en outre du code de programme informatique configuré de façon à, avec le au moins un processeur, amener l'appareil (800) à :
- demander un code de fonctionnalité avancée (616) audit dispositif RFID (100).

8. Un appareil de lecture (800) selon l'une quelconque des revendications 5, 6 et 7, comprenant en outre du code de programme informatique configuré de façon à, avec le au moins un processeur, amener l'appareil (800) à :
- recevoir des données de fonctionnalité avancée (618) à partir dudit dispositif RFID, lesdites données de fonctionnalité avancée étant conservées en mémoire sur ledit dispositif RFID, et lesdites données de fonctionnalité avancée étant spécifiques au dispositif RFID (100),
- demander des informations audit dispositif RFID (100), lesdites informations portant sur ladite fonctionnalité avancée et lesdites informations étant différentes desdites données de fonctionnalité avancée (618), et
- utiliser lesdites données de fonctionnalité avancée reçues (618) dans l'utilisation desdites informations demandées de façon à utiliser ladite fonctionnalité avancée d'une manière distribuée.

9. Un appareil (800) selon l'une quelconque des revendications 5 à 8 comprenant en outre du code de programme informatique configuré de façon à, avec le au moins un processeur, amener l'appareil (800) à :
- dériver un résultat de fonctionnalité avancée par l'utilisation de ladite fonctionnalité avancée dudit dispositif RFID (100), et
- envoyer ledit résultat de fonctionnalité avancée audit dispositif RFID (100) pour la conservation en mémoire dudit résultat de fonctionnalité avancée dans une mémoire (122).

10. Un appareil (800) selon la revendication 9, comprenant en outre du code de programme informatique configuré de façon à, avec le au moins un processeur, amener l'appareil à :
- envoyer au moins des informations parmi des informations d'emplacement et des informations temporelles audit dispositif RFID (100) pour la conservation en mémoire dudit résultat de fonctionnalité avancée dans une mémoire (122) en association avec lesdites informations de fonctionnalité avancée.

11. Un procédé de fourniture d'une fonctionnalité avancée par un dispositif RFID (100) à un dispositif de lecture (800), ladite fonctionnalité avancée étant une fonctionnalité autre que la fourniture d'une identification (614, 620), ledit dispositif RFID (100) étant énergétiquement passif, le procédé comprenant :
- l'envoi d'un code de fonctionnalité avancée (616) dudit dispositif RFID (100) audit dispositif de lecture (800), ledit code de fonctionnalité avancée (616) indiquant que ledit dispositif RFID (100) fournit ladite fonctionnalité avancée, et ledit code de fonctionnalité avancée permettant audit dispositif de lecture (800) d'ajuster son fonctionnement en fonction de ladite fonctionnalité avancée,
- la réception d'une demande d'informations en fonction dudit code de fonctionnalité avancée (616) à partir dudit dispositif de lecture (800), lesdites informations portant sur ladite fonctionnalité avancée, et
- l'envoi desdites informations demandées en fonction dudit code de fonctionnalité avancée (616) audit dispositif de lecture (800) de façon à utiliser ladite fonctionnalité avancée.

12. Un procédé selon la revendication 11, le procédé comprenant en outre :
- l'accès à une mémoire locale (122) de façon à obtenir des données de fonctionnalité avancée (618) associées auxdites informations demandées, lesdites données de fonctionnalité avancée étant spécifiques au dispositif RFID (100), lesdites informations portant sur ladite fonctionnalité avancée et lesdites informations étant différentes desdites données de fonctionnalité avancée (618), et
- l'envoi desdites données de fonctionnalité avancée (618) dudit dispositif RFID (100) à un dispositif de lecture (800) en vue d'une utilisation dans le traitement desdites informations demandées.

13. Un procédé selon la revendication 11 ou 12, dans lequel
- le dispositif de lecture fait partie d'un système de réseau,
- ladite fonctionnalité avancée comprend une fonctionnalité avancée de mesure de température,
- lesdites informations sont indicatives d'une température,
- lesdites informations demandées sont accessibles par ledit système de réseau, lesdites informations étant à utiliser de façon à former une valeur de température, et
le procédé comprenant en outre :
- la conservation en mémoire d'une valeur de température dans une mémoire dudit système de réseau, ladite valeur de température ayant été formée à partir desdites informations demandées par un traitement.

14. Un procédé selon la revendication 13, comprenant en outre :
- l'accès à une mémoire locale (122) au niveau d'un dispositif RFID (100) de façon à obtenir des données de fonctionnalité avancée (618) associées auxdites informations demandées, lesdites données de fonctionnalité avancée (618) étant à utiliser pour une mesure de température, et
- l'envoi desdites données de fonctionnalité avancée (618) à partir dudit dispositif RFID (100) en vue d'une utilisation dans le traitement desdites informations demandées.

15. Un dispositif RFID (100), ledit dispositif RFID (100) étant énergétiquement passif et agencé de façon à fonctionner au moyen d'une énergie provenant d'un signal sans fil reçu, et ledit dispositif RFID comprenant une antenne, un circuit logique tel qu'un agencement de portes logiques ou un processeur et une mémoire comprenant du code de programme informatique exécutable sur ledit processeur, le circuit logique ou le code de programme informatique étant configurés de façon à amener le dispositif RFID (100) à :
- envoyer un code de fonctionnalité avancée (616) dudit dispositif RFID (100) à un dispositif de lecture (800), ledit code de fonctionnalité avancée (616) indiquant que ledit dispositif RFID (100) fournit ladite fonctionnalité avancée, ladite fonctionnalité avancée étant une fonctionnalité autre que la fourniture d'une identification (614, 620), et ledit code de fonctionnalité avancée permettant à un lecteur (800) d'ajuster son fonctionnement en fonction de ladite fonctionnalité avancée,
- recevoir une demande d'informations en fonction dudit code de fonctionnalité avancée (616) à partir dudit dispositif de lecture (800), lesdites informations portant sur ladite fonctionnalité avancée, et
- envoyer lesdites informations demandées en fonction dudit code de fonctionnalité avancée (616) audit lecteur accessible à distance (800) de façon à utiliser ladite fonctionnalité avancée.

16. Un dispositif RFID selon la revendication 15, comprenant en outre un circuit logique ou du code de programme informatique configurés de façon à amener le dispositif RFID à :
- accéder à une mémoire locale (122) de façon à obtenir des données de fonctionnalité avancée (618) associées auxdites informations demandées, lesdites données de fonctionnalité avancée étant spécifiques au dispositif RFID (100), lesdites informations portant sur ladite fonctionnalité avancée et lesdites informations étant différentes desdites données de fonctionnalité avancée (618), et
- envoyer lesdites données de fonctionnalité avancée (618) dudit dispositif RFID (100) à un dispositif de lecture (800) en vue d'une utilisation dans le traitement desdites informations demandées.

17. Un dispositif RFID (100) selon la revendication 16, ledit dispositif RFID (100) comprenant en outre un circuit logique tel qu'un agencement de portes logiques ou un processeur et une mémoire comprenant du code de programme informatique exécutable sur ledit processeur, le circuit logique ou le code de programme informatique étant configurés de façon à amener le dispositif RFID (100) à :
- envoyer des informations en fonction de ladite fonctionnalité avancée audit dispositif de lecture (800) de façon à dériver un résultat de fonctionnalité avancée,
- recevoir ledit résultat de fonctionnalité avancée à partir dudit dispositif de lecture (800), et
- conserver en mémoire ledit résultat de fonctionnalité avancée dans une mémoire (122).

18. Un procédé de fabrication d'un dispositif RFID énergétiquement passif, le procédé comprenant :
- la combinaison d'au moins une puce et d'une antenne de façon à former un dispositif RFID (100),
- la formation de données d'identification (614, 620) dans une mémoire du dispositif RFID, **caractérisé en ce que** le procédé comprend :
- la formation d'un code de capacité avancée (616) sur le dispositif RFID (100) destiné à l'envoi du code de fonctionnalité avancée (616) du dispositif RFID (100) à un dispositif de lecture (800), le code de capacité avancée (616) étant indicatif d'une capacité avancée du dispositif RFID (100), ladite capacité avancée étant une capacité autre que la fourniture d'une identification (614, 620), et lesdites données d'identification (614, 620) étant différentes dudit code de capacité avancée (616).

19. Un produit de programme informatique incorporé sur un support lisible par ordinateur, ledit produit de programme informatique comprenant du code de programme informatique, ledit code de programme informatique étant agencé de façon à, lorsqu'il est exécuté sur un processeur, exécuter le procédé selon l'une quelconque des revendications 1 à 4 ou 11 à 14.

20. Un procédé selon l'une quelconque des revendications 1 à 4 ou 11 à 14, dans lequel le dispositif RFID est une étiquette RFID.

21. Un appareil ou un dispositif selon l'une quelconque des revendications 5 à 10 ou 15 à 17, dans lequel le dispositif RFID est une étiquette RFID.
